# EUROPEAN PATENT SPECIFICATION

(11) **EP 2 103 501 B1**
(45) Date of publication and mention of the grant of the patent: **13.11.2013**
(21) Application number: 08102795.5
(22) Date of filing: 20.03.2008
(51) Int. Cl.: B62D 21/02

(54) **Frame for vehicle**
Fahrzeugrahmen
Chassis pour véhicule

(43) Date of publication of application: 23.09.2009
(73) Proprietor: IVECO S.p.A., 10156 Torino (IT)
(72) Inventor: Hoelzle, Franz, 89257 Illertissen (DE); Giehle, Peter, 89278 Oberfahlheim (DE); Duncker, Benjamin, 89077 Ulm (DE)
(74) Representative: Borsano, Corrado

(56) References cited:
- WO-A-02/055363
- US-A- 1 547 263
- US-A- 1 727 999
- US-A- 1 917 894

## Description

The present invention relates to a method for assembling a frame for vehicle intended to be used for transportation. In particular, the frame according to the present invention is suitable to be used on heavy vehicles intended to transport goods and/or passengers.

The frames for heavy vehicles known in the prior art include two side members which constitute the principal structure of the frame, substantially developing in a longitudinal way, said side members being connected by means of transversal structural elements, the cross members.

In the frame assembling, the dimensional characteristics of the side members and of the cross members may be different. In particular, the thickness of the frame side members may vary according to the loads that will weight on the frame in its usual operating conditions.

At present, the frames known in the prior art have a portion corresponding to the rear part of the vehicle wherein the side members are parallel between each other, at a certain distance, an intermediate portion wherein the side members are divergent, and a further portion corresponding to the front part of the vehicle wherein the side members are again parallel between each other, consequently at a distance which is higher than before and is a function of the bend angle of the side members in the divergent portion and a function of the length of said divergent portion.

According to what is known in the prior art, in the rear part of the frame where the side members are parallel, one or more cross members are connected to the side members in correspondence of the internal surface of the side members themselves, while in the front part of the frame there are the supports for the engine, for the gearbox, for the suspension of the front axle and, again, the stiffening cross members, which here are, however, connected to the external surface of the side members. In other words, in its front part the frame has to respect a limit for its external dimensions C, in order to allow the assembling of the frame itself with the cross member and/or the suspension system of the front axle.

DE10216274 shows a vehicle frame, whom side members diverge towards vehicle front side.

W002055363 shows a method for producing a vehicle frame in a modular way. A front module and a rear module are telescopically reciprocally engaged so as to make easier to manage the angular geometry of rail components.

The described frames of the type known, however, present a number of drawbacks. In particular, the thickness S of the side members of the frames of the type known cannot be varied according to the design needs, without being obliged to vary at the same time the shape of the side members, changing the bend angles and/or the length of the divergent portion, or changing the components, such as the cross member or the suspension of the front axle.

More in detail, the problem of the frames of the type known in the art is the following: when the thickness of the side members varies, it is necessary to vary the shape of the side members, in order to respect the limits of dimension that allow the use of the same components for the cross members both of the front part and of the rear part.

The primary purpose of the present invention is to provide a method for assembling a frame for a vehicle intended to be used for transportation that overcomes the drawbacks of the frames of the type known.

In the scope of this task, the purpose of the present invention is to provide a method, according to claim 1, for producing a frame which allows the use of the same cross members even when the thickness of the side members varies.

This task and these and other purposes that are explained below are achieved by a method according to claim 1.

Further characteristics and advantages of the present invention will become clear from the following detailed description, that is merely illustrative and not limitative and is shown in the figures that are attached hereto, in which:
figure 1 shows a schematic top view of the frame side members produced according to the present invention;

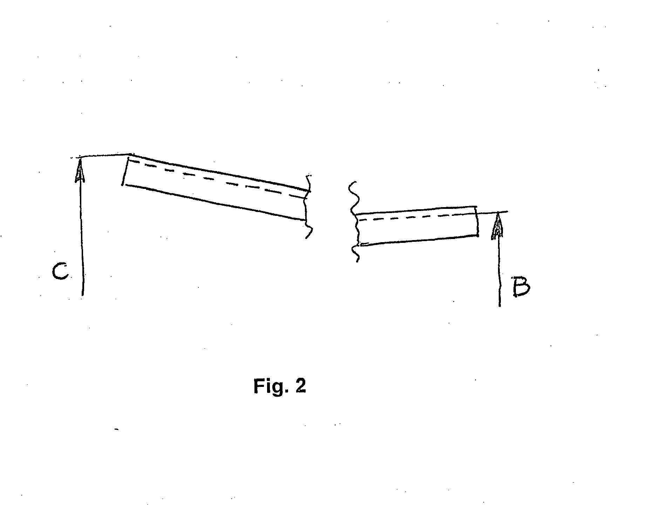

figure 2 shows an enlarged view of the initial and final part of the side members of figure 1.

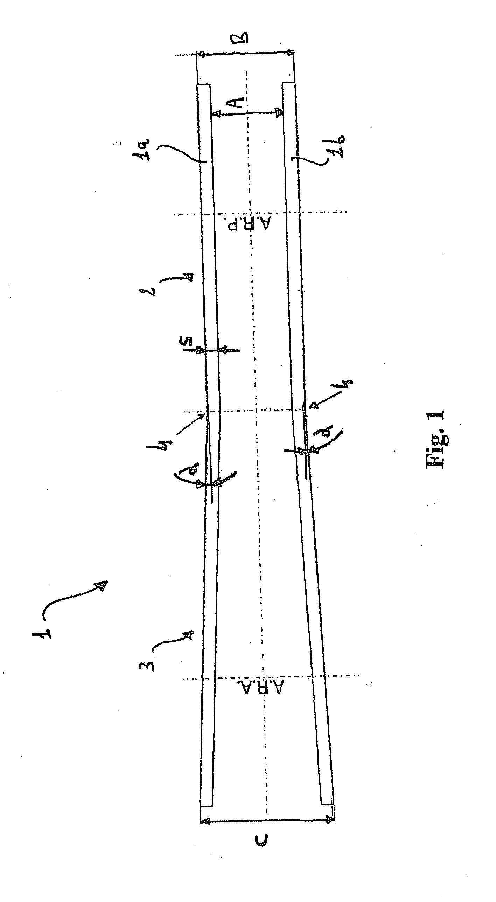

With particular reference to figure 1, the frame 1 according to the present invention comprises two side members respectively 1 a and 1 b, each presenting a first rectilinear part, generically indicated by 2 in the attached figure, and a second rectilinear part, generically indicated by 3.

Between the first part 2 which corresponds to the portion of frame corresponding to the rear part of the vehicle, and the second part 3 which corresponds to the portion of frame corresponding to the front part of the vehicle, there is a bending point 4, so that the direction of the first part 2 and the direction of the second part 3 define an angle α .

In the assembling of the side members 1 a and 1 b for the realization of the frame, they are placed side by side as shown in figure 1, that is the two parts 2, which make the portion of frame corresponding to the rear part of the vehicle, are parallel between each other, while the two parts 3 corresponding to the front part of the vehicle are divergent.

The axis A.R.A. and A.R.P. shown in figure 1 respectively correspond to the front wheel axis and to the rear wheel axis.

Therefore the frame according to the present invention allows to leave unchanged the limit C of the dimensions of the frame front part , that is the distance between the external faces of the side members, even when the thickness of the frame side members varies.

Leaving the distance A unchanged, which is the distance between the two side members in correspondence of the first part 2, or rear part, wherein said side members are parallel, when the thickness S of the side members themselves varies, the rear dimension B of the frame is A + 2S, and consequently the front dimension C of the thickness is increased of 2S.

The frame according to the present invention, however, allows the side members 1 a and 1 b to deform as to nullify the effect of the increase of the side member thickness S on the front dimension C of the frame itself.

The presence of at least one bend in the bending point 4 of each side member allows, during the assembling of the vehicle frame, to deform the side member itself in the divergent front part 3, as to respect the limit of dimension C, regardless of the thickness value S. In fact each side member can dispose of the whole part 3 in order to elastically absorb the deformation imposed to reduce the front dimension C.

In order to provide some dimensional parameters that are useful to understand the magnitudes related to the thickness and the bend angle α, the working value for the angle α is here reported as about 2,6°. Similarly, consider that a realistic value for the thickness variation may be comprised, purely as an indication, between 4 and 10 mm for each side member.

Therefore it has been shown that the method for the construction of a cross member according to the present invention achieves the purpose and the objects proposed.

In particular, it has been shown how the frame according to the present invention allows to leave unchanged both the distance A between the internal surfaces of the side members in the rear part of the frame, and the front dimension C of the frame, intended as the distance between the external surfaces of the side members in the front part 3 of the frame, even when the thickness S of the side members varies.

More in detail, the frame according to the present invention allows an optimization of the production costs of a vehicle, as it makes the assembling of the frame to the vehicle modular. In fact, even in case the thickness of the side members has to be increased, for frame dimensioning reasons, it will be possible to use the same cross members in the assembling of the frame to the vehicle, both in the rear part and in the front part, for any thickness value of the side members S.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. Method for producing a frame (1) for vehicle, of the type comprising two side members (1a, 1b) substantially developing in a longitudinal way and placed side by side, each side member having a thickness (S), the method comprising
- producing on each of said side members (1a, 1b), along its length, at least one bending point (4) which defines on each side member (1a, 1b) at least a first rectilinear part (2) and at least a second rectilinear part (3), so that the direction of the first part (2) and the direction of the second part (3) of each side member defines a bend angle (α);
- disposing said side members (1a, 1b) so that said first rectilinear parts (2) of said side members (1a, 1b) are parallel between each other and said second rectilinear parts (3) are divergent between each other;
**Characterized in that**
said second rectilinear parts (3) correspond to the front part of the vehicle
and by means of the step of:
- during the assembling of the vehicle frame, deforming elastically each side member itself in the divergent front part (3), whilst leaving unchanged the internal distance (A) between the side members (1a, 1b) in correspondance of their first rectilinear parts (2), so as to respect the external front dimension (C) of the frame, regardless of the thickness value (S) by disposing of the whole front part (3) in order to elastically absorb the deformation imposed to reduce the external front dimension (C).

2. Method according to claim 1, wherein the working value for the said bend angle (α) is about 2,6°

## Patentansprüche

1. Verfahren zum Herstellen eines Fahrzeugrahmens (1), von dem Modell aufweisend zwei Längsträger (1a, 1b), die sich im Wesentlichen in einer Längsrichtung ausbilden und nebeneinander angeordnet werden, wobei jeder Längsträger eine Dicke (S) aufweist, wobei das Verfahren umfasst
- Herstellen mindestens einer Biegestelle (4) auf jedem der Längsträger (1 a, 1 b) entlang seiner Länge, die auf jedem Längsträger (1 a, 1 b) mindestens einen ersten geradlinigen Teil (2) und mindestens einen zweiten geradlinigen Teil (3) definiert, so dass die Richtung des ersten Teils (2) und die Richtung des zweiten Teils (3) von jedem Längsträger einen Biegewinkel (α) definiert,
- Anordnen der Längsträger (1 a, 1 b), so dass die ersten geradlinigen Teile (2) der Längsträger (1 a, 1 b) parallel zueinander sind und die zweiten geradlinigen Teile (3) divergent zueinander sind;
**dadurch gekennzeichnet, dass**
die zweiten geradlinigen Teile (3) dem Vorderteil des Fahrzeugs entsprechen und durch den Schritt:
- bei dem Zusammenbauen des Fahrzeugrahmens, elastisches Deformieren jedes Längsträgers selbst in dem divergenten Vorderteil (3), während die innere Entfernung (A) zwischen den Längsträgern (1 a, 1 b) entsprechend ihrer ersten geradlinigen Teile (2) unverändert gelassen wird, um die äußere Vorderabmessung (C) des Rahmens zu berücksichtigen, ohne Rücksicht auf den Wert der Dicke (S) durch Anordnen des gesamten Vorderteils (3), um die Deformation elastisch zu absorbieren, die eingeführt wird, um die äußere Vorderabmessung (C) zu reduzieren.

2. Verfahren nach Anspruch 1, wobei der funktionsfähige Wert des besagten Biegewinkels (α) ungefähr 2,6° ist.

## Revendications

1. Procédé de production d'un châssis (1) pour un véhicule, du type comprenant deux éléments latéraux (la, 1b) se développant sensiblement de manière longitudinale et placés côte à côte, chaque élément latéral présentant une épaisseur (S), le procédé comprenant
- la production sur chacun desdits éléments latéraux (la, 1b) le long de sa longueur, d'au moins un point de pliage (4) qui définit sur chaque élément latéral (la, 1b) au moins une première partie rectiligne (2) et au moins une seconde partie rectiligne (3) de sorte que la direction de la première partie (2) et la direction de la seconde partie (3) de chaque élément latéral définissent un angle de pliage (α) ;
- la disposition desdits éléments latéraux (la, 1b) de sorte que lesdites premières parties rectilignes (2) desdits éléments latéraux (1a, 1b) soient parallèles entre elles et que lesdites secondes parties rectilignes (3) soient divergentes entre elles ;
**caractérisé en ce que**
lesdites secondes parties rectilignes (3) correspondent à la partie avant du véhicule et
et **caractérisé par** l'étape suivante :
- pendant l'assemblage du châssis du véhicule, la déformation élastique de chaque élément latéral lui-même dans la partie avant divergente (3) tout en laissant intacte la distance interne (A) entre les éléments latéraux (la, 1b) en correspondance avec leurs premières parties rectilignes (2) de sorte à respecter la dimension avant externe (C) du châssis indépendamment de la valeur de l'épaisseur (S) en disposant la partie avant entière (3) afin d'absorber élastiquement la déformation imposée pour réduire la dimension avant externe (C).

2. Procédé selon la revendication 1, dans lequel la valeur de travail pour ledit angle de pliage (α) est d'environ 2,6 °.
